# EUROPEAN PATENT SPECIFICATION

(11) **EP 0 960 637 B1**
(45) Date of publication and mention of the grant of the patent: **26.11.2008**
(21) Application number: 99303948.6
(22) Date of filing: 20.05.1999
(51) Int. Cl.: A63F 9/24, A63F 13/08, A63F 13/02

(54) **Hand-held color display game machine and memory medium therefor**
Tragbares Farbanzeigevideospiel und zugehöriges Speichermedium
Jeu vidéo portable avec dispositif d'affichage en couleur et son dispositif d'enregistrement

(30) Priority: 27.05.1998 JP 14562098
(43) Date of publication of application: 01.12.1999
(73) Proprietor: Nintendo Co., Ltd., Kyoto-shi, Kyoto (JP)
(72) Inventor: Okada, Satoru, Kyoto (JP); Umezu, Ryuji, Kyoto (JP); Nakashima, Takanobu, Kyoto (JP)
(74) Representative: Jones, Colin

(56) References cited:
- EP-A- 0 466 936
- US-A- 5 184 830
- US-A- 5 483 257
- US-A- 5 495 266
- US-A- 5 556 108

## Description

### BACKGROUND OF THE INVENTION

### Field of the invention

This invention relates to a hand-held color display game machine and memory medium therefor, and more particularly to a hand-held game machine which is capable of selectively mounting thereon one of a first memory medium memorized with black-and-white display tone data and a second memory medium memorized with color-display color data, and a memory medium therefor.

### Description of the prior art

Conventionally, there has been a game machine provided with an 8-bit hand-held liquid crystal display, say a product named "Game Boy (registered trademark)" produced and marketed by the present applicant, in order to effect display in black-and-white tones by using a dot matrix liquid crystal display. In this hand-held or portable game machine, when a character is to be displayed, black-and-white tones in four kinds could be designated for each dot constituting a character, thus displaying the character in black-and-white tones on a liquid crystal display screen.

Meanwhile, in Japanese Patent Laid-open No. H7-204349 [A63F 9/22, 24/G06T 1/00] laid open on August 8, 1995 based on an application filed by the present applicant, a converter apparatus is disclosed wherein, when a cartridge for a black-and-white-displaying first game machine is used on a color-displayable second game machine, a black-and-white image can be displayed in color of image. In this prior art, color image display is realized by interposing a color-conversion converter apparatus between a cartridge and a second game machine.

The above-described hand-held game machine has character data memorised on a memory (ROM) within the cartridge. However, this character data is mere black-and-white tone data. Consequently, the character could be displayed only in black-and-white tones.

Meanwhile, in the art of Japanese Patent Laid-open No. H7-204349, color image display of black-and-white images has required a converter connection between a cartridge and a second game machine. This however was inconvenient for use.

Furthermore, the color-conversion of background and object images to be displayed was by a single color palette, limiting color display to an extremely small number of kinds.

EP-A-0466936 discloses an animation display unit includes a main body and an external memory fitted removably to the main body and a video data memory for storing graphic data of characters constituting an object disposed in the main body. Object data of an object to be displayed on a raster scan monitor, that is, color pallet data, object name data, vertical centering data, horizontal centering data, object size selection data and size designation data are stored beforehand in the program data memory of the external memory. The object data of the object to be displayed on the next vertical retrace line are read out from the program data memory and are stored in an object attribute memory. An in-range decision circuit makes in-range decision on the basis of the vertical centering data, the size selection data and the size designation data and makes in-range decision on the basis of the vertical centering data, the size selection data and the size designation data.

US-A-5184830 discloses a hand-held electronic game machine for use with attachable/detachable memory game packs wherein the game machine includes a case of a size which may be held by a hand and capable of being sandwiched by both hands with a first switch disposed at a position such that during a game it can be operated by one thumb on a front surface of the case, a second switch disposed at a position such that during a game it can be operated by the other thumb on the first surface of the case and a third operation switch means provided in a region of said front surface where imaginary loci of both thumbs intersect with each other on the front surface, and wherein the game machine can be connected with others for simultaneous multiple player competition.

### SUMMARY OF THE INVENTION

Therefore, it is a primary object of embodiments for this invention to provide a novel portable or hand-held color display game machine.

It is another object of embodiments of this invention to provide a portable or hand-held color display game machine which can display game characters in color even with using either a black-and-white display memory medium or a color image display memory medium.

It is another object of embodiments of this invention to provide a memory medium and portable or hand-held color display game machine which can display a background image and an object image, respectively, based on different color palettes.

In accordance with one aspect of the present invention, there is provided a hand-held color display game machine characterised in that said game machine is capable of selectively mounting a first memory medium which includes a tone data output means to output tone data, and a second memory medium which includes a color data output means to output color data, and said game machine comprises a memory medium determining means for making a first determination when said first memory medium is mounted or a second determination when said second memory medium is mounted; a first color processing means for performing a first color processing on data read from said first memory medium in response to said first determination, said first color processing means including a first color palette to convert said tone data into a first color display signal; a second color processing means for performing a second color processing on data read from said second memory medium in response to said second determination, said second color processing means including a second color palette to convert said color data into a second color display signal; and a color display means for displaying a game image based on one of said first color display signal and said second color display signal.

In a preferred embodiment, the first color palette includes a first object background color palette used to display a background character in color and a first object character color palette used to display an object character in color.

In a preferred embodiment, the first object character color palette includes a second plurality of object color palettes.

In a preferred embodiment, the second color palette includes a second background character color palette used to display a background character in color and a second object character color palette used to display an object character in color.

In a preferred embodiment, the second background character color palette includes a third plurality of background color palettes, and the second object character color palette including a fourth plurality of object color palettes.

Said first memory medium may memorise a program for black-and-white display and a second memory medium may memorise a program for color display, said first memory medium including a background image tone data memory area to memorise tone data for a background image and an object image tone data memory area to memorise tone data for an object image, said second memory medium including a background image color palette data memory area to memorise a plurality of kinds of color palette data for said background image, an object image color palette data memory area to memorise a plurality of kinds of color palette data for said object image, and a color palette designation data memory area to memorise background image color palette designation data to designate an arbitrary color palette for each character of said background image and object image color palette designation data to designate an arbitrary color palette for each character of said object image, any one of said first memory medium and said second memory medium including a color compatible data memory area to memorise data representative of color non-compatibility or data representative of color compatability, wherein said memory medium determining means may determine, based on the data memorised in said color compatible data memory area, which one of said first memory medium and said second memory medium is to be used; said hand-held color display game machine further comprising: a background image color palette memory means for memorising background image color palette data corresponding to said background image tone data memorised in said first memory medium; an object image color palette memory means for memorising object image color palette data corresponding to said object image tone data memorised in said first memory medium; and a color image signal creating means for creating a color image for said background image and said object image; wherein said color image signal creating means creates a color image signal for said background image based on a combination of said background image tone data and said background image color palette data and a color image signal for said object image based on a combination of said object tone data and said object image color palette data when said first memory medium is being used as determined by said memory medium determining means, and a color image signal for said background image based on background image color palette data designated by said background image color palette designation data and a color image signal for said object image based on said object image color palette data designated by said object image color palette designation data when said second memory medium is being used as determined by said memory medium determining means.

In an embodiment, the object image color palette memory means memorises first object image color palette data and second object image color palette data, the first memory medium further comprising color palette designation data to designate color palette data for the object image, the color image signal creating means creating a color image signal for the object based on a combination of the object image tone data and the first object image color palette when the first object image color palette is selected based on the color palette designation data, and a color image signal for the object image based on a combination of the object image tone data and the second object image color palette when the second object image color palette is selected based on the color palette designation data.

Also, the color display game machine may further comprise an operating means to be operated by a user, and a color palette change means to change the background image color palette data and the object image color palette data based on color palette data selected by the operator in response to an instruction to select a color palette by operation of the operating means, the color image signal creating means creating a color image signal for the background image based on a combination of the background image tone data and background image color palette data changed by the color palette change means, and a color image signal for the object image based on a combination of the object image tone data and object image color palette data changed by the color palette change means.

The first memory medium is previously memorized, for example, with black-and-white tone data while the second memory medium is previously memorized with color palette data and color palette designation data. The hand-held color display game machine determines whether a medium being mounted at that time is the first memory medium or the second memory medium, based on a color non-compatible code set in the first memory medium and a color compatible code set in the second memory medium. The hand-held color display game machine includes, for example, a CPU to perform a first color processing on the black-and-white data read responsive to a first determination from the first memory medium thereby outputting a first color display signal. Concretely, the first color display signal is created by combining with a first color palette set in the hand-held color display game machine and the tone data. In a second color processing, a second color display signal is obtained by combining second color palette data and color palette designation data read from the second memory medium. Either one of the first color display signal or the second color display signal is displayed, for example, on a color LCD.

In the case where the first color palette includes a first background character color palette used to color-display a background character and a first object character color palette used to color-display an object character, the first color processing on the background character is conducted by the background tone data and first background character color palette data read from the first memory medium. Further, the first color processing on an object character is made by the object tone data and first object character color palette data read from the first memory medium.

Where the second color palette includes a second background character color palette used to color-display a background character and a second object character color palette used to color-display an object character, the second color processing on a background character is conducted by the second background character color palette data read from the second memory medium. Further, the second color processing on an object character is made by the second object character color palette data read from the second memory medium.

Where the first background character color palette and the second background character color palette are set each in plurality of number, background character representation can be made with variety in color. Similarly, if the first object character color palette and the second object character color palette are set each in plurality of number, object character representation is made with variety in color.

The present invention provides a color-displayable hand-held game machine on which can selectively use a first memory medium for black-and-white tone display and a second memory medium for color display.

Furthermore, according to the invention, it is possible to use a black-and-white display first memory medium for a conventional black-and-white display hand-held game machine on the color display game machine. Due to this, software resources now in hand can be effectively utilized and the software to be used on the color game machine is broadened in kind.

Furthermore, according to the present invention, where a conventional black-and-white display first memory medium is used on the color-display game machine, background and object images are color-displayed by color palette data different from each other. It is possible to increase a maximum number of colors to be displayed on a screen.

The above described objects and other objects, features, aspects and advantages of the present invention will become more apparent from the following detailed description of the present invention when taken in conjunction with the accompanying drawings

### BRIEF DESCRIPTION OF THE DRAWINGS

Figure 1 is an illustrative view showing a relationship of interchangeability between a color compatible cartridge and color display game machine to which this invention is applied and a black-and-white exclusive cartridge and black-and-white game machine;
Figure 2 is a overall block diagram of a color compatible cartridge and color display game machine according to one embodiment of the present invention;
Figure 3 is an illustrative view showing an address space to which the CPU is accessible;
Figure 4 is an illustrative view showing an external ROM memory map of a black-and-white exclusive cartridge (color non-compatible cartridge);
Figure 5 is an illustrative view showing an external ROM memory map of a color compatible cartridge;
Figure 6 is an illustrative view showing a memory map detailing color palette areas;
Figure 7 is an illustrative view showing an internal ROM memory map;
Figure 8 is an illustrative view showing a memory map detailing color palette table areas;
Figure 9 is an illustrative view showing one example of a color compatible code and color non-compatible code;
Figure 10 is an illustrative view showing one example of main body discriminating data;
Figure 11 is an illustrative view showing an internal memory map;
Figure 12 is an illustrative view showing a display RAM memory map;
Figure 13 is an illustrative view showing correspondence between a BG display area and an LCD display area;
Figure 14 is a flowchart showing a main routine of game operation in one embodiment of the present invention;
Figure 15 is a flowchart showing an initial setting process subroutine;
Figure 16 is a flowchart showing a game (color) process subroutine;
Figure 17 is a flowchart showing a CPU operation speed change subroutine;
Figure 18 is a flowchart showing a color initial setting subroutine;
Figure 19 is a flowchart showing a color palette select subroutine;
Figure 20 is a flowchart showing a game (color) process subroutine; and
Figure 21 is an illustrative view showing one example of a color palette select window.

### DETAILED DESCRIPTION OF THE PREFERRED EMBODIMENTS

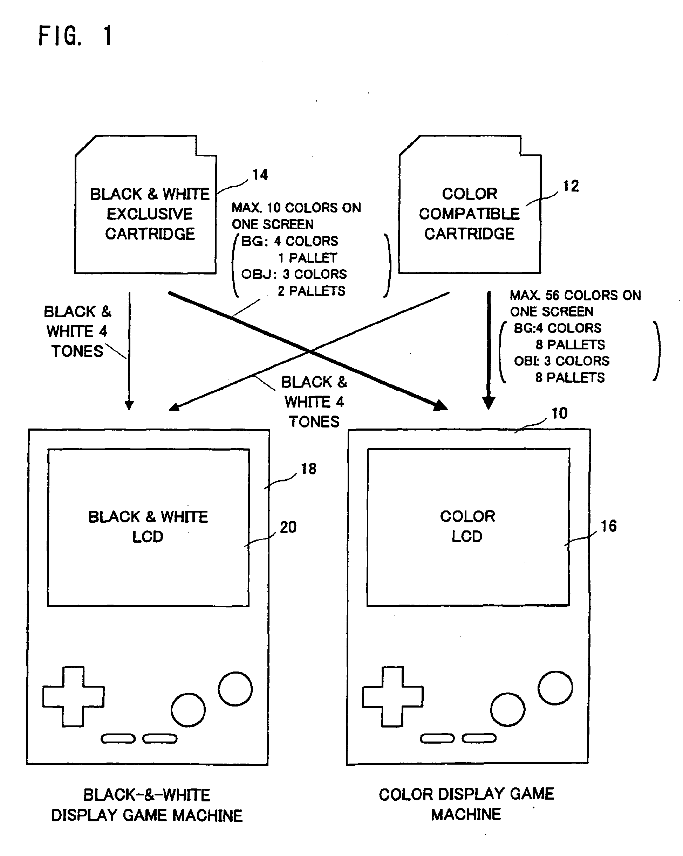

Referring to Figure 1, a hand-held color display game machine 10 (hereinafter referred merely to as "color display game machine") to which the invention is directed has an insertion hole (not shown) in which selectively mounted is a color compatible cartridge 12 or black-and-white exclusive cartridge 14 to which this invention is also directed, thereby displaying game characters in color on a color LCD 16.

It should be noted that a hand-held black-and-white display game machine (hereinafter referred merely to as "black-and-white display game machine") 18 having no bearing on this invention displays a game character in black-and-white 4 tones on a black-and-white LCD 20, by using a color compatible cartridge 12 or black-and-white exclusive cartridge 14.

Although explained in detail later, when a color compatible cartridge 12 is attached to the color display game machine 10, the color LCD (Liquid Crystal Display) 16 displays a character, for example, in maximally 56 colors. Contrary to this, where a black-and-white exclusive cartridge 14 is used on the color display game machine 10, a game character is displayed in maximally 10 colors. That is, the color display game machine 10 uses different color palettes between the color compatible cartridge 12 and the black-and-white exclusive cartridge 14, thereby displaying a game image in different number of colors.

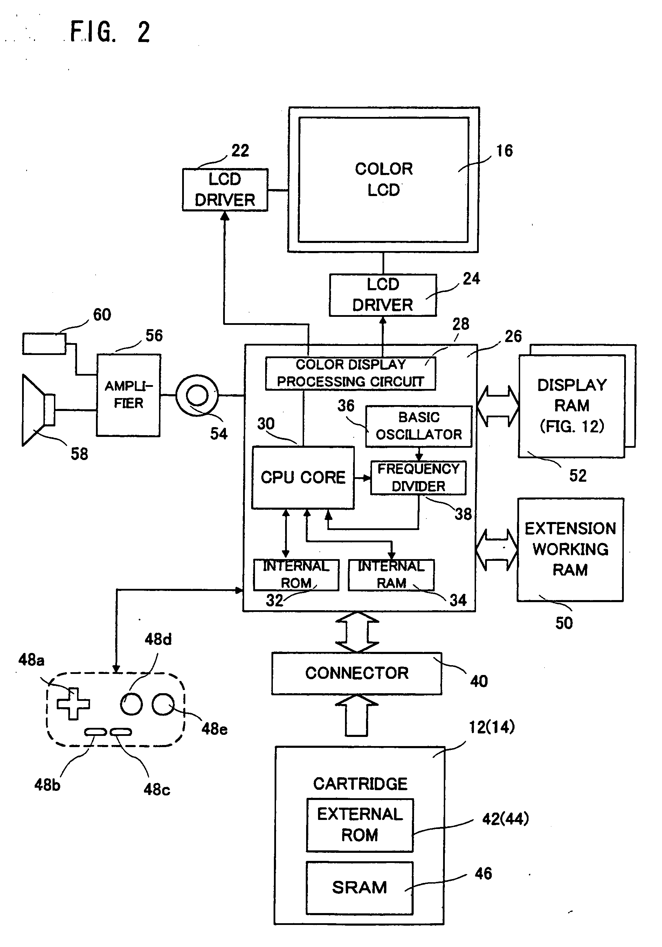

Referring to Figure 2, the color display game machine 10 includes, as stated before, the color LCD 16. This color LCD 16 is structured as a dot matrix display unit. This color LCD 16 is driven by LCD drivers 22 and 24 to display color images on its screen. The LCD driver 22 drives selectively, say, a row whereas the LCD driver 24 drives selectively, say, a column. These LCD drivers 22 and 24 are supplied by color image signals from a color display processing circuit 28 included in a CPU 26.

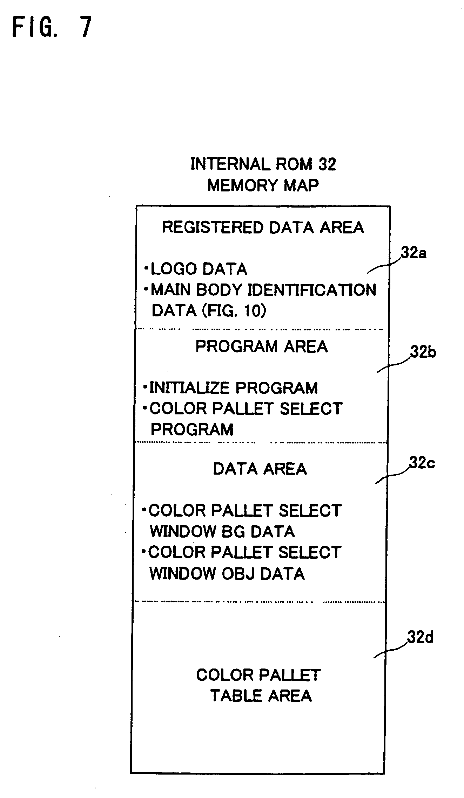

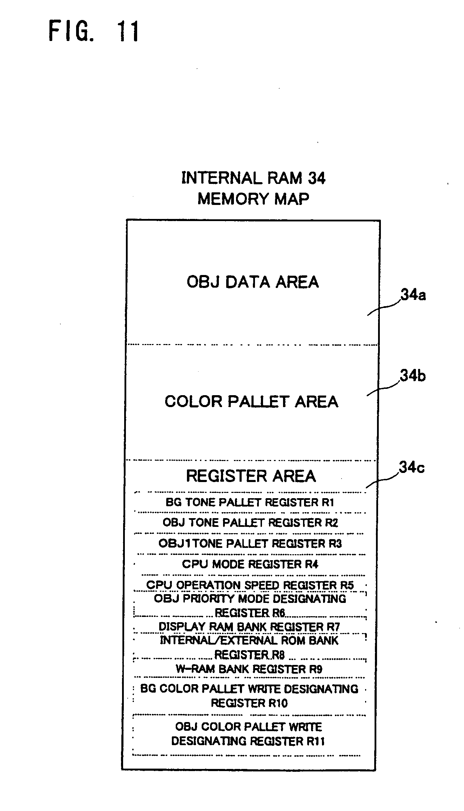

The CPU 26 further includes a CPU core 30. This CPU core 30 is coupled to an internal ROM 32 and an internal RAM 34. The internal ROM 32 includes various data areas shown in Figure 7. Also, the internal RAM 34 is utilized as a working memory for the CPU core 30, and possesses a memory area shown in Figure 11.

The CPU 26 further includes a basic oscillator 36. This basic oscillator 36 is structured, for example, by a quartz oscillator, and supplies an oscillation signal to a programmable frequency divider 38. This programmable frequency divider 38 performs frequency division on an oscillation signal from the basic oscillator 36 according to frequency division data from the CPU core 30, and supplies the frequency-divided signal as a clock for the CPU core 30.

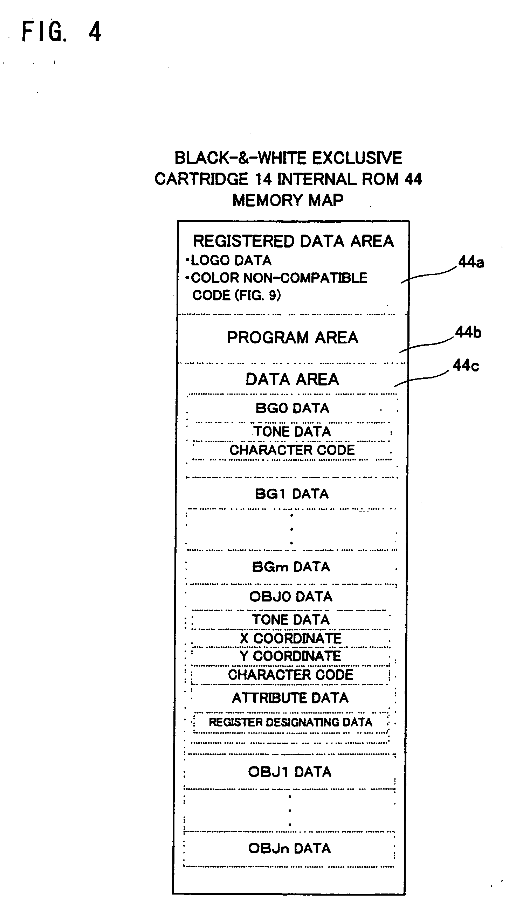

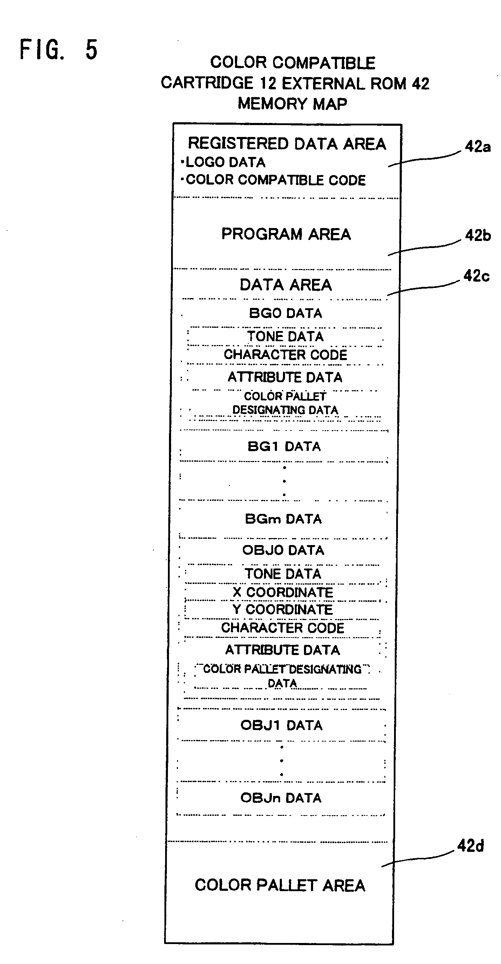

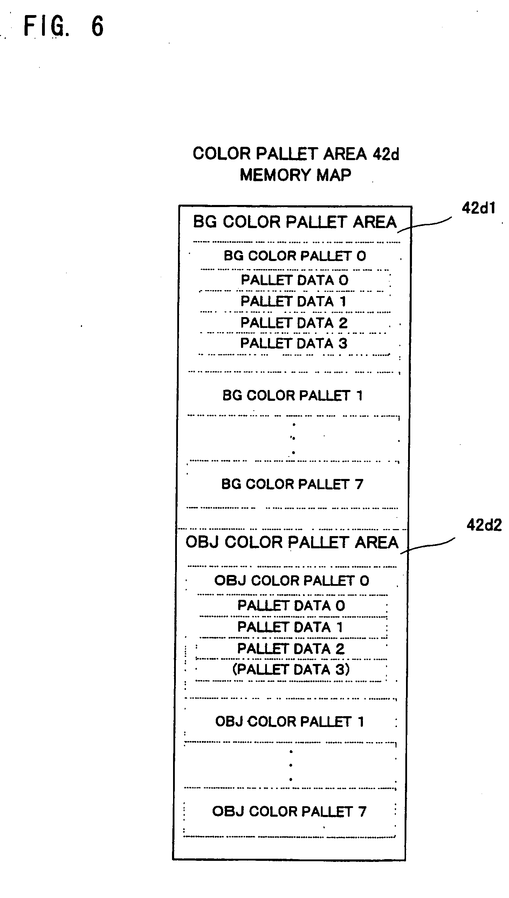

The CPU 26 is connected with a connector 40 through an appropriate bus. This connector 40 is attached selectively with a color compatible cartridge 12 or black-and-white exclusive cartridge 14 shown in Figure 1. The cartridge 12 or 14 includes an external ROM 42 or 44 and SRAM. In the case of a black-and-white exclusive cartridge 14, its external ROM 44 is previously memorized with various ones of data as shown in Figure 4. The external ROM 46 of the color compatible cartridge 12 is previously stored with data shown in Figure 5 and Figure 6. The SRAM 46 is used to memorize game backup data.

The CPU 26 is further supplied by respective operation signals of operation keys 48a - 48e. The operation key 48a is used to instruct to move a game character displayed on the color LCD 16 in four directions of up, down, left and right. The operation key 48a is a select key used to select, say a game mode. The operation key 48c is so-called a start key used to start a game play or temporarily stop to advance a game. The operation keys 48d and 48e are push bottom switches. By manipulating these operation keys 48d and 48e, a game character being displayed on the color LCD 16 can be given various movements, say using weapons, jumping and so on. These operation keys 48a - 48e are arranged on a main body front face of the color display game machine 10. A key matrix (not shown) sends an operation signal as controller data of these operation keys 48a - 48e to the CPU 26.

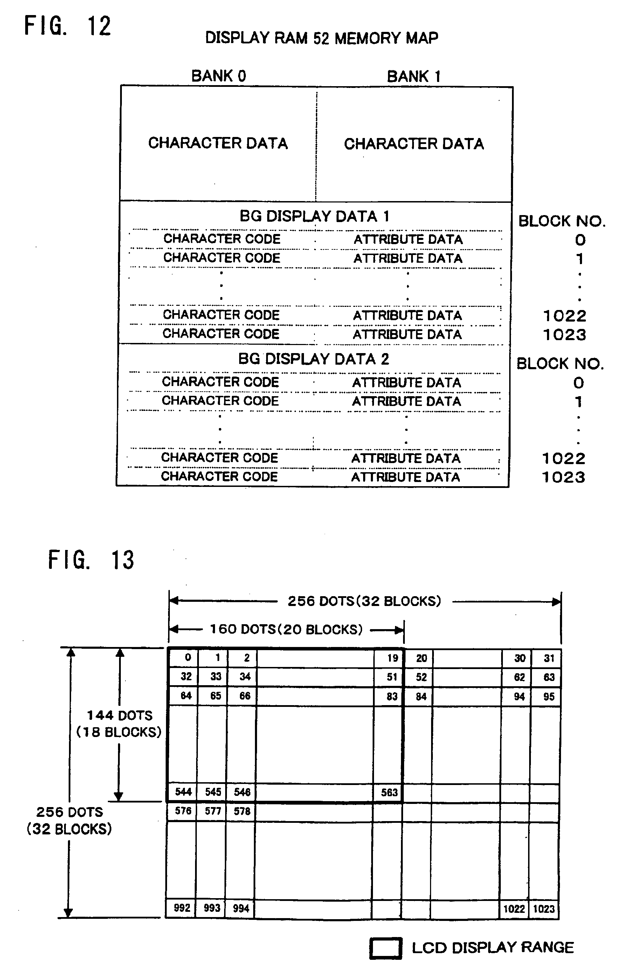

Using an extension RAM 50 as required, the CPU 26 executes data processing and writes display data to a display RAM 52 according to game programs and character data given from the cartridge 12 or 14 as well as controller data from the operation keys 48a - 48e. This display RAM 52 is configured, as shown in Figure 12, by two, first and second banks. The display RAM 52 possesses as its entirety a memory area greater than a display range of the color LCD 16 so that scroll display is made possible in directions of up and down and/or left and right on the screen of the color LCD 16.

As a result of the data processing by the CPU 26, a sound signal to be outputted is adjusted in level by volumes 54 and 56 and outputted to a speaker 58 and/or earphone jack 60. The sound signal outputted through this speaker and/or earphone jack 60 includes game effect sounds and game music.

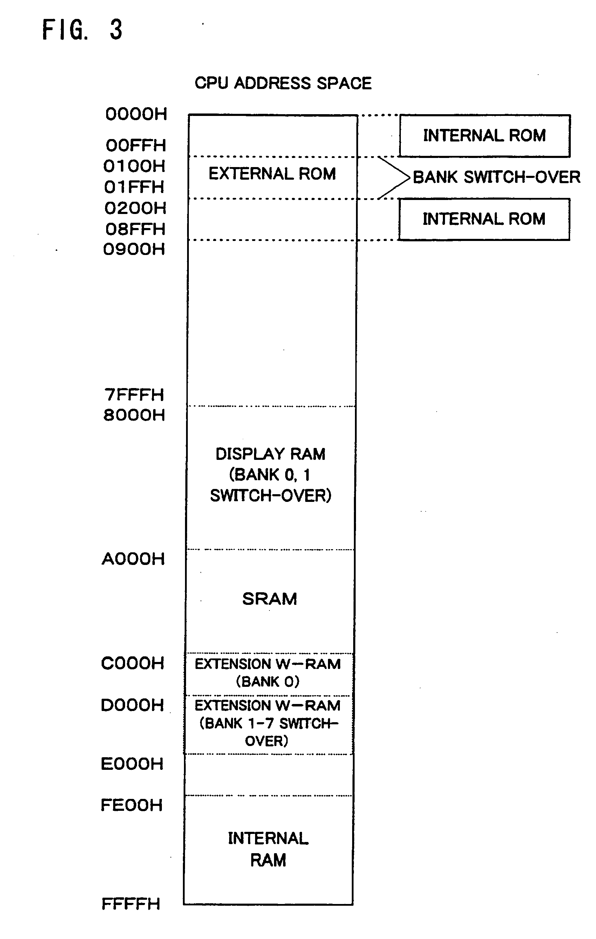

The CPU 26 has an address space shown in Figure 3. The internal ROM 32 (Figure 2) of the CPU 26 is accessed by an address "0000H - 00FH" (hexadecimal number, true for the hereinafter) or "0200H - 08FFH" when an internal/external ROM bank switch register R8 assumes "0". Other ROM address spaces (01000H - 01FFH, 0900H - 7 FFFH) were accessed by the external ROM 42 or 44. When the internal/external ROM bank switch register R8 assumes "1", all the ROM address spaces can be accessed by the external ROM 42 or 44. The display RAM 52 (Figure 2) is accessed by an address "8000H - 9FFFH" with the first or second bank is switched over. The SRAM 46 (Figure 2) of the cartridge 12 or 14 has an address "A000H - BFFFH". The extension RAM 50 (Figure 2) has an address "C000H - DFFFH" wherein this extension RAM 50 has a home bank, i.e. bank 0, is assigned to "C000H - CFFFH". The other banks 1 - 7 are assigned to "D000H - DFFFH". The internal RAM 34 (Figure 2) of the CPU 26 is accessed through an address "FE00H - FFFFH".

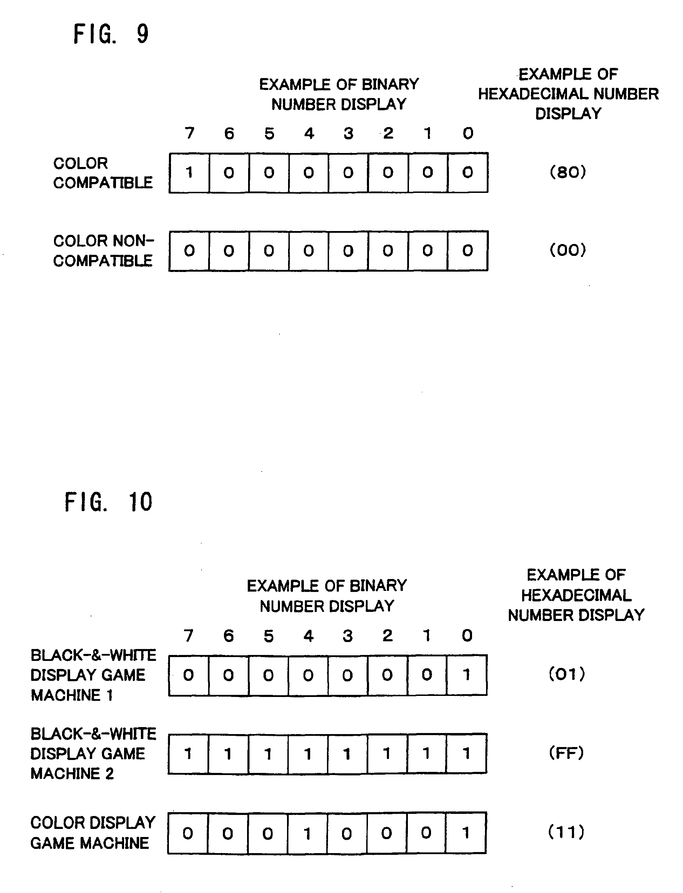

Figure 4 shows a memory map of the external ROM 44 contained in the black-and-white exclusive cartridge 14. A registration data area 44a is previously stored with Logo data to verify in a manner described later whether the cartridge is an authorized one or not, and a color non-compatible code. A program area 44b is stored with a game program. A data area 44c includes background character data and object character data. The color non-compatible code in this embodiment is set by a different code from a color compatible code, say "00000000", as shown in Figure 9.

The background character data includes black-and-white tone data (4 tones) and character codes which are set for each of background characters BG0 - BGm. The object character data includes black-and-white tone data (4 tones), coordinate data, character codes, attribute data and register designating data which are set for each of object characters OBJ0 - OBJn.

Figure 5 shows a memory map of the external ROM 42 contained in the color compatible cartridge 12. A registration data area 42a is memorized with similar Logo data and a color compatible code, similarly to the black-and-white cartridge 14. A program area 42b is memorized with a game program and a main body discrimination data determining program. The main body discrimination data determining program is a program to detect main body discrimination data shown in Figure 10 and determine whether the cartridge is attached to the color display game machine 10 or black-and-white display game machine 18. The data area 42c includes background character data and object character data. Incidentally, in this embodiment "10000000" shown in Figure 9 is set as a color compatible code. The external ROM 42 of the cartridge 12 further includes a color palette area 42d.

The background character data includes color tone data (4 tones), character codes and attribute data which are set for each of the background characters BG0 - BGm. The attribute data includes color palette designation data. The color palette designation data is data to designate which one is to be used among 8 palettes set for background characters. Incidentally, the color palettes for the background characters are set 8 in number as stated above, wherein different four colors are determined different by each color palette. The object character data includes color tone data (4 tones), coordinate data, character codes and attribute data that are set for each of the object characters OBJ0 - OBJn, while the attribute data includes a color palette designating data. The color palette designating data is data to designate which one is to be used among 8 palettes set for the object character. Incidentally, the object character color palettes are set 8 in number as stated above, wherein different 3 colors are set by each color palettes.

Explaining in greater detail, the color palette area 42d shown in Figure 6 includes a background (BG) character color palette area 42dl and an object (OBJ) character color palette area 42d2. The BG color palette area 42dl is formed with 8 color palettes of BG color palettes 0 - 7 each of which includes 4 colors determined by palette data 0-3. The OBJ color palette area 42d2 is formed with 8 color palettes of OBJ color palettes 0 - 7 each of which is set with 3 colors of palette data 0 - 2. Each palette data is 2-byte (16-bit) data representative of a unicolor.

By separately setting the background character color palette and the object character color palette as in this embodiment, it is possible to display a color game image in many colors on the color LCD 16 with using comparatively decreased palette data.

Incidentally, it was illustrated in Figure 6 that each of the OBJ color palettes 0 - 7 is set with the palette data 0 - 3 for the convenience sake. However, it should be noted that the palette data 3 is not set in the external ROM 42 although it is set in the internal RAM 34.

Figure 7 shows a memory map of the internal ROM 32 of the CPU 26 shown in Figure 2. This internal ROM 32 includes a registration data area 32a, program area 32b data area 32c and color palette table area 32d, similarly to the external ROM 42 or 44 of the cartridge 12 or 14. The registration data area 32a is previously memorized with Logo data to verify as to authorization of the cartridge 12 or 14, say external ROM 42 or 44, and main body discriminating data shown in Figure 10. The color display game machine in the embodiment is set with main body discriminating data, say "00010001". Incidentally, although there is no direct bearing on this invention, the black-and-white display game machine 18, in one machine, is set with main body discriminating data "00000001" and, in another machine, is set with main body discriminating data "11111111".

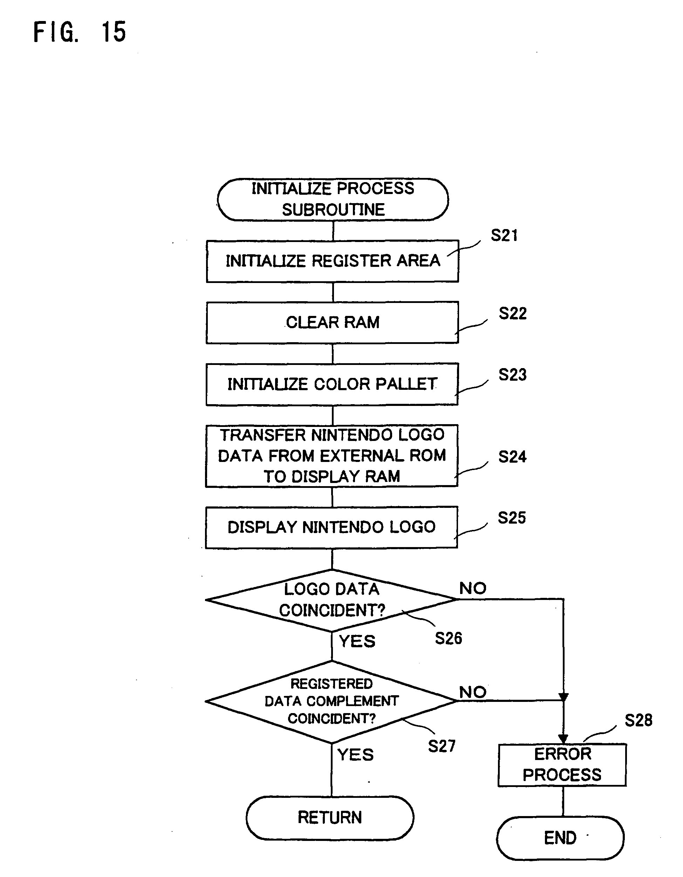

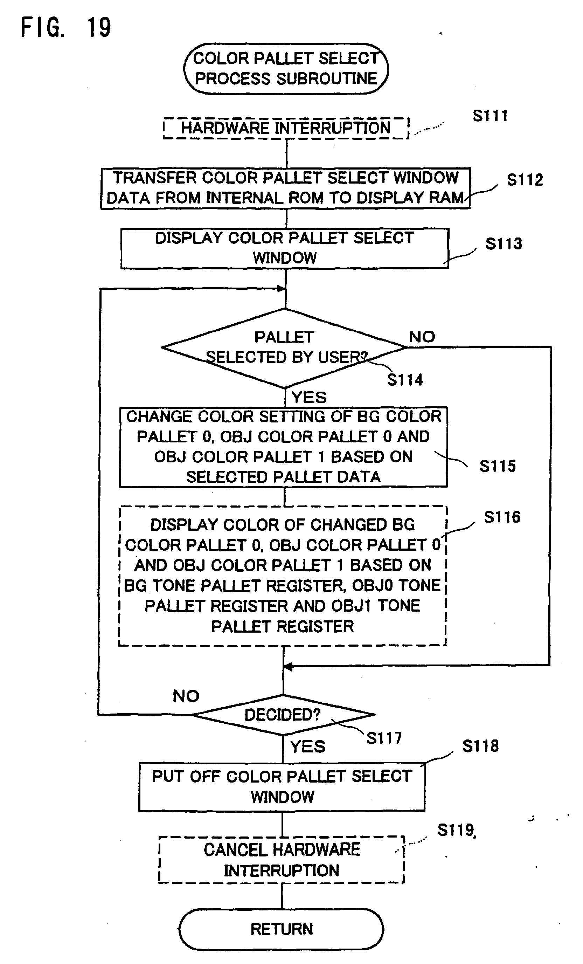

Returning to Figure 7, the program area 32b includes an initializing program concretely illustrated in Figure 15 and a color palette select program shown in detail in Figure 19. The initializing program, in brief, is a program to verify an authorization of a cartridge. The initializing program determines whether or not there is coincidence between the Logo data set in the registration data area 42a or 44a of the external ROM 42 or 44 and the Logo data set in the registration data area 32a of the internal ROM 32. When both of the Logo data are coincident, the relevant cartridge is permitted to use.

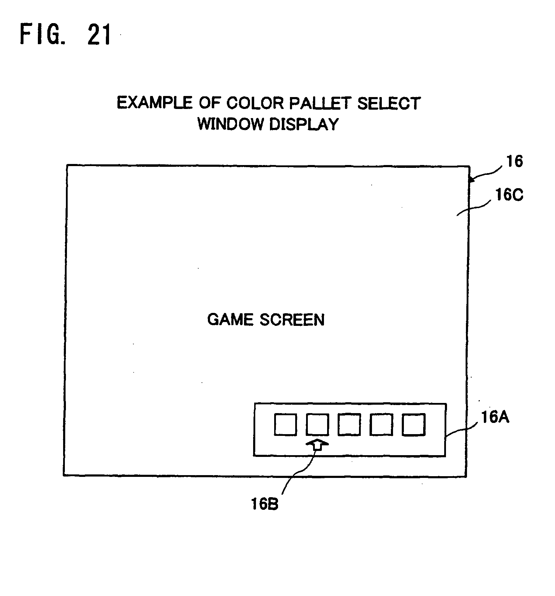

The color palette selecting program is a program to display, as shown in Figure 21, a color palette select window 16A on the color LCD 16 (Figure 1 or Figure 2), for selecting which one is to be used of the black-and-white cartridge color palette areas 1 - L. The data to display this color palette selecting window is set in the data area 32c.

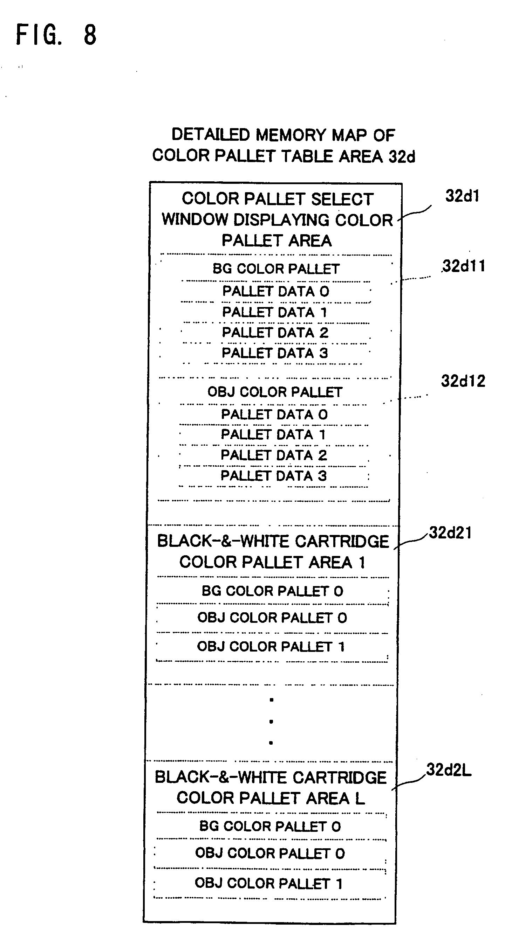

The color palette table area 32d is a color palette area having color data to display color palette selecting windows 16A and 16B (Figure 21) on a game screen 16C (Figure 21), and includes as concretely shown in Figure 8 a color palette selecting window display color palette area 32dl and black-and-white cartridge color palette areas 32d21 - 32dL (L is an arbitrary numeral). The color palette select window display color palette area 32dl includes a background (BG) color palette 32dll and an object (BJ) color palette 32d12, each of which is set with palette data 0 - 3. Each of the black-and-white cartridge color palette areas 32d2 - 32dL is set with a background (BG) color palette and two object (OBJ) color palettes 0/1.

As explained before, the display RAM 52 constitutes a display memory to display background characters, wherein in this embodiment two display memories are formed. Each display memory, as shown in Figure 12 and Figure 13, has a memory capacity corresponding to the number of blocks (1024) considerably greater than the number of blocks (360) to be displayed by the color LCD 16. Accordingly, the game image being displayed on the color LCD 16 can be smoothly scrolled. The display RAM 52 has two banks, wherein each bank includes two display memories. Each bank is written by character data of a background character having been stored as dot data and attribute data of each block. Here, the "block" is a 64-dot area formed in 8 × 8 dots on the color LCD 16.

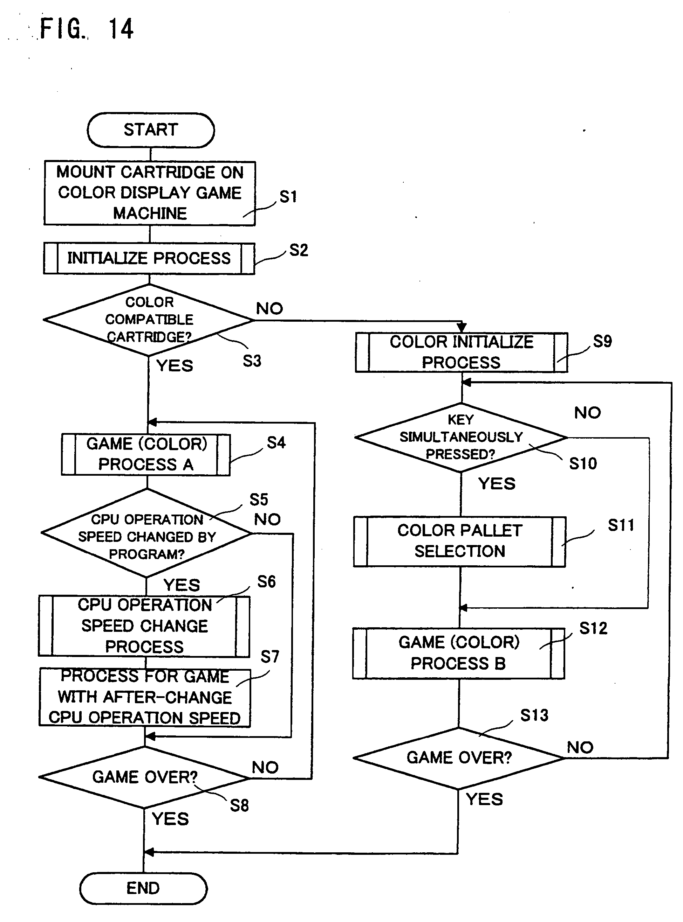

Referring to a game operation main routine shown in Figure 14, if a cartridge 12 or 14 is mounted in an insertion hole (not shown) of the color display game machine 10, the CPU 26 (actually the CPU core 30: Figure 2) executes an initially setting routine shown in step S2.

In first steps S21, S22 and S23 of the initially set routine shown in Figure 15, the register area 34c of the internal RAM 34 (Figure 11) is initialized and the OBJ data area 34a is cleared off. Further, the color palette area 34b is initialized. In succeeding step S24, the CPU (CPU core 30) reads Logo data from the register data area 42a or 44a of the external ROM 42 or 44, and transfer the Logo data to the character data area (Figure 12) of the display RAM 52. In the embodiment, Logo data was set as Logo data which is to display a Logo mark "NINTNEDO" that is a registered trademark owned by the present applicant. Accordingly, in step S25 a Logo mark "NINTENDO" is displayed on the color LCD 16. It is noted that arbitrary Logo data is usable.

In next step S26, the CPU 26 reads Logo data set in the register data area 32a of the external ROM 32, and compares it with the Logo data of the external ROM 42 or 44 read in the previous step S24 to thereby determine whether or not these of the Logo data are coincident with each other. Together therewith in step S27, the CPU 26 determines a complementary number of a sum of registration data set in the registration data area 42a or 44a of the external ROM 42 or 44, and determines whether it is coincident with complementary data separately set in the registration data area 42a or 44a of the external ROM 42 or 44 or not.

Steps S26 and S27 are steps to verify whether the cartridge being mounted on the color display game machine at that time is a genuine cartridge or not, which are executed according to an initializing program set in the program area 32b of the external ROM 32 shown in Figure 7. The determination of "NO" in any of these steps S26 and S27 means that an unjustly created program is inoperable. In such a case, the CPU executes an error process in step S28 wherein an infinite loop is entered within the internal ROM 32 and no game is started. Therefore, if an unjust cartridge is attached to the color display game machine 10, the same is rejected to use. Thus such a bogus cartridge is excluded.

If "YES" is determined in both of the steps S26 and S27, the cartridge being mounted at that time is determined as a genuine cartridge and the process returned to the main routine shown in Figure 14.

In step S3 of the main routine, the CPU 26 determines whether the cartridge mounted is a color compatible cartridge 12 or a color non-compatible cartridge (black-and-white cartridge) 14. Each cartridge is previously set with a color compatible or color non-compatible code in the registration data area 42a or 44a, as shown in Figure 9. Accordingly, the CPU 26 in this step S3 may read out a code and determine whether at least an uppermost order bit is "1" or "0". If a color non-compatible code "0" is detected in the step S3, the CPU 26 determines that a black-and-white cartridge 14 is attached. If a color compatible code "1" is detected in the step S3, the CPU 26 determines that a color cartridge 12 is mounted.

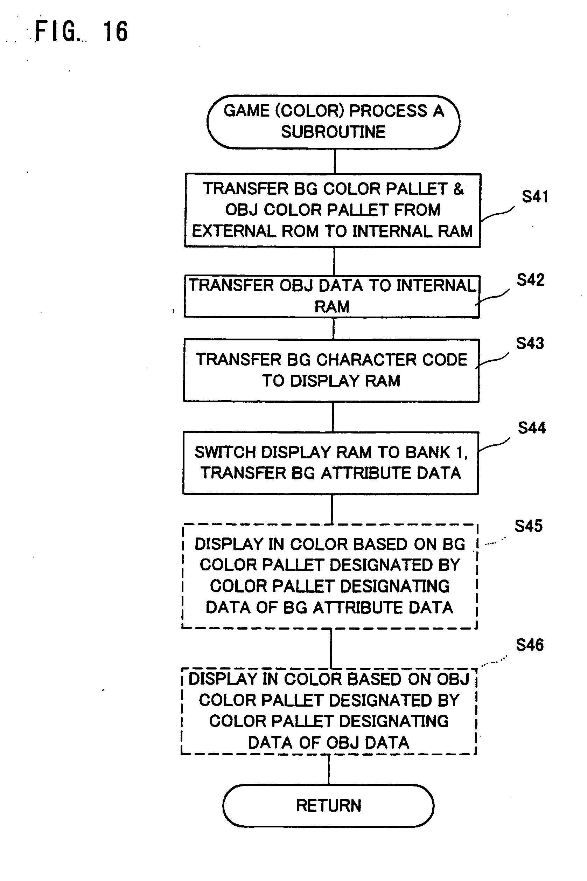

Where a color cartridge 12 is mounted, a game process (including color processing) is executed in step S4. In the first step S41 of a game (color) process routine shown in Figure 16, the CPU 26 reads a background (BG) color palette and object (OBJ) color palette out of the color palette area 42d of the external ROM 42, and transfers these color palettes to the color palette area 34b of the internal RAM 34. In step S42, the CPU 26 reads OBJ data of an object character to be displayed at that time from the data area 42c of the external ROM 42 according to the game program. This OBJ data is written onto the OBJ data area 34a of the internal RAM 34. Furthermore, in step S43 a character code of a background character to be displayed at that time is transferred to the BG display data area of the display RAM 52. Thereafter, in step S44 the display RAM 52 is switched in bank to the bank 1, and attribute data contained in the BG data is written to each block.

In the succeeding step S45, a background (BG) character is displayed in color on the color LCD 16, by using a BG color palette designated by color palette designating data contained in the BG attribute data having transferred to the display RAM 52. Further, in step S46 an object (OBJ) character is displayed in color on the color LCD 16, by using an OBJ color palette designated by color palette designating data contained in the OBJ data transferred to the internal RAM 34.

It should be noted that actually the steps S45 and S46 are executed by a hardware process by the color display processing circuit 28 (Figure 2) included in the CPU 26. For this reason, Figure 16 shows these steps S45 and S46 by dotted lines. Meanwhile, in Figure 16 actual game processes to be executed by the game program (say, clash determination, core processing and so on) have almost no bearing on this invention and hence omitted.

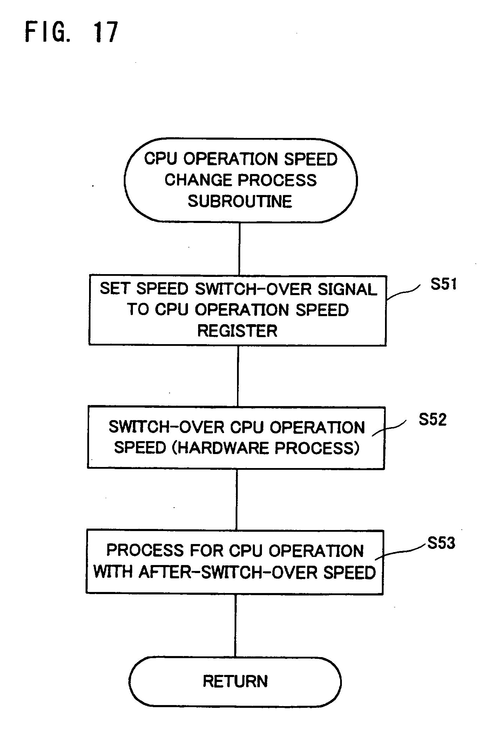

In step S5 it is determined whether an instruction was given to change the CPU operation speed by the game program or not. If there was an instruction to change the speed, then, in step S6 a speed change routine of Figure 17 is executed. In the first step S51 of the CPU operation speed change routine, a speed switch signal (data) is set in a CPU operation speed register R5 included in the register area 34c of the internal RAM 34. In step S52 a frequency dividing ratio corresponding to the speed switch signal is set in the programmable frequency divider 38 thereby changing the system clock frequency. Accordingly, the CPU 26 at the step S53 and subsequent operates in compliance with the operation speed thus changed. That is, in step S7 and subsequent of the main routine, the game (color) process is executed at the changed CPU operation speed.

Incidentally, the reason why in the steps S6 and S7 the CPU operation speed is changed for the case of using a color compatible cartridge in order to effect processing at a speed higher than the case of using a color non-compatible cartridge, is to prevent the processing from becoming heavy due to increase in the number of displayable colors or data.

If a game-over is detected in the game (color) processing, that is, in step S8, the main routine of this game operation is ended.

Where the cartridge mounted is determined as a black-and-white cartridge 14 in the former step S3, a color initial setting process of step S9 is executed.

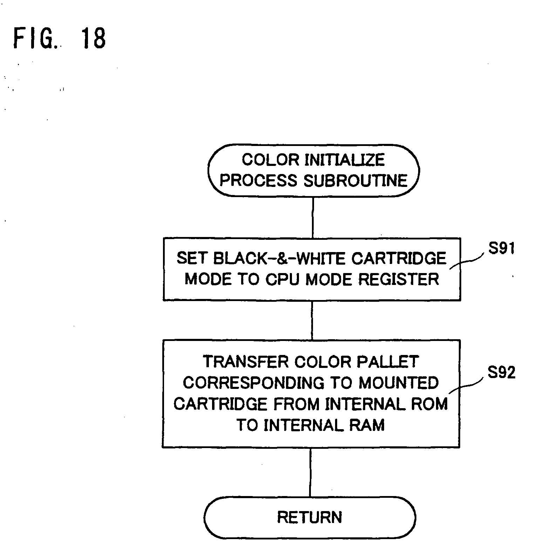

In the first step S91 of a color initial setting process routine shown in Figure 18, the CPU 26 (CPU core 30) sets a black-and-white cartridge mode in the CPU mode register R4 formed in the register area 34c of the internal RAM 34. In the next step S92, a color palette corresponding to the black-and-white cartridge being mounted is read out of the color palette area 32d21 - 32d2L of the internal ROM 32, and written to the color palette area 34a of the internal RAM 34.

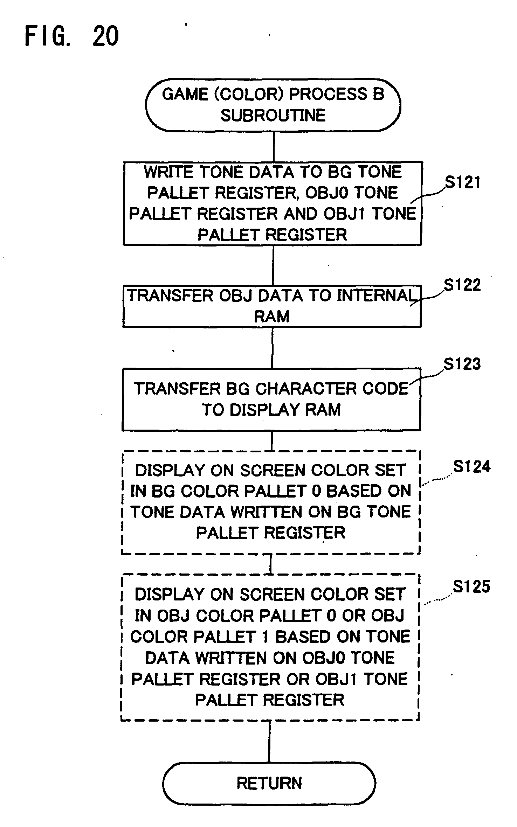

Explaining in detail, in step S121 (Figure 20) of the game (color) process routine executed by the step S12, the BG tone data set in the data area 44c of the external ROM 44 is written to the BG tone palette register R1, and the OBJ tone data set in the data area 44c of the external ROM 44 is written to the OBJ tone palette register R2 or OBJ1 tone palette register R3. In step S122 the CPU 26 reads OBJ data for an object character to be displayed at that time out of the data area 44c of the external ROM 44. This OBJ data is written to the OBJ data area 34a of the internal RAM 34. Further in step S123, a character code for a background character to be displayed at that time is transferred to the BG display area data of the display RAM 52.

After setting in the internal RAM 34 an arbitrary black-and-white cartridge color palette as well as the BG tone data and the OBJ tone data in this manner, in step S124 the color display processing circuit 28 (Figure 2) displays a background (BG) character in a color set in the BG color palette 0 on the color LCD 16 based on the tone data written to the BG tone palette register R1. In step S125, the color display processing circuit 28 displays an object (OBJ) character in a color set in the OBJ color palette 0 or OBJ color palette 1 on the color LCD 16 based on the tone data written to the OBJ 0 tone palette register R2 or OBJ1 palette register R3, according to register designation data set in the data area 44c of the external ROM 44.

In the main routine, it is determined at all times in step S10 whether or not a color palette change request has been inputted by the user or player. In the embodiment, where any two of the operation keys 48a - 48e shown in Figure 2 is depressed simultaneously, it is considered that a color palette change request has been inputted. That is, in the step S10 simultaneous depression of two keys is detected, a color palette select process routine of step S11 is executed.

In step S111 of a color palette select routine of Figure 19, a hardware interrupt is inputted by simultaneous depression of two operation keys. In the next step S112, background (BG) data for a color palette select window set in the data area 32c of the internal ROM 32 is transferred to the display RAM 52 according to a color palette select program set in the program area 32b in the internal ROM 32, causing a window 16a and cursor 16b shown in Figure 20 to be displayed on the color LCD 16.

In step S114, the CPU 26 then determines whether a color palette was selected by the user or player. When the user or player selects a color palette, any of the operation keys 48a - 48e is used. Accordingly, the CPU 26 can determine whether a color palette was selected or not by determining whether a relevant operation key was operated or not.

Where the user or player selected color palette, "YES" is determined in step S114. In the next step S115, the palette "color" data of the BG color palette 0, OBJ color palette 0 and OBJ color palette 1 in the color palette region 34b of the internal RAM 34 are changed according to the selected palette data. In step S116, the palette data, i.e., the BG color palette 0, OBJ color palette 0 or OBJ color palette 1, changed in the step S115 is written to the color palette area 34b of the internal RAM 34 using the color palette write designation registers R10 and R11. Accordingly, the color of the color palette selected by the user is displayed in the window 16a of Figure 21.

If in step S117 the determination button is depressed or the color palette selection is cancelled by the user or player, in step S118 the display of the window 16A and the cursor 16B is suspended, and in step S119 the hardware interrupt is cancelled.

In this manner, the user or player can properly change or select a BG color palette and OBJ color palette to be displayed according to black-and-white tone data by using a color non-compatible cartridge 14 during game play.

Due to this, in the game (color) process routine executed after the step S11 (Figure 14), BG characters and OBJ characters are displayed in color according to the user-selected color palette.

Incidentally, where the color compatible cartridge 12 is mounted on the black-and-white display game machine 18, it is natural that only the BG tone data and OBJ tone data in the data area 42c are used and characters are displayed in black-and-white tones. Although the present invention has been described and illustrated in detail, it is clearly understood that the same is by way of illustration and example only and is not to be taken by way of limitation, the spirit and scope of the present invention being limited only by the terms of the appended claims.

It is to be understood that the scope of the present invention is not to be unduly limited by the particular choice of terminology and that a specific term may be replaced by any equivalent or generic term. For example, the term "hand held" could be replaced or supplemented by "portable". Further it is to be understood that individual features, method or functions related to the game machine or program might be individually patentably inventive. In particular, any disclosure in this specification of a range for a variable or parameter shall be taken to include a disclosure of any selectable or derivable sub-range within that range and shall be taken to include a disclosure of any value for the variable or parameter lying within or at an end of the range. The singular may include the plural or vice versa.

Therefore, further according to the present invention there is provided a colour display game machine adapted to display game characters in colour using a black & white display memory medium or colour display memory medium (no separate colour conversion apparatus being required when using the black and white memory medium).

Further according to the present invention there is provided a memory medium and colour display game machine which can display a background image and an object image based on different colour palettes.

Further according to the present invention there is provided any feature or combination of features derivable from the description, drawings and Abstract.

## Claims

1. A hand-held color display game machine **characterised in that**
said game machine is capable of selectively mounting a first memory medium which includes a tone data output means to output tone data, and a second memory medium which includes a color data output means to output color data, and
said game machine comprises:
a memory medium determining means for making a first determination when said first memory medium is mounted or a second determination when said second memory medium is mounted;
a first color processing means for performing a first color processing on data read from said first memory medium in response to said first determination, said first color processing means including a first color palette to convert said tone data into a first color display signal;
a second color processing means for performing a second color processing on data read from said second memory medium in response to said second determination said second color processing means including a second color palette to convert said color data into a second color display signal; and
a color display means for displaying a game image based on one of said first color display signal and said second color display signal.

2. A hand-held color display game machine according to claim 1, wherein said first color palette includes a first number of colors, and said second color palette includes a second number of colors that is greater than said first number.

3. A hand-held color display game machine according to claim 2, wherein said first color palette includes a first object background color palette used to display a background character in color and a first object character color palette used to display an object character in color.

4. A hand-held color display game machine according to claim 3, wherein said first object character color palette includes a second plurality of object color palettes.

5. A hand-held color display game machine according to claim 2, wherein said second color palette includes a second background character color palette used to display a background character in color and a second object character palette used to display an object character in color.

6. A hand-held color display game machine according to claim 5, wherein said second background character color palette includes a third plurality of background color palettes, and said second object character color palette includes a fourth plurality of object color palettes.

7. A hand-held color display game machine according to claim 1 wherein said first memory medium memorises a program for black-and-white display and said second memory medium memorises a program for color display,
said first memory medium including a background image tone data memory area to memorise tone data for a background image and an object image tone data memory area to memorise tone data for an object image,
said second memory medium including a background image color palette data memory area to memorise a plurality of kinds of color palette data for said background image, an object image color palette data memory area to memorise a plurality of kinds of color palette data for said object image, and a color palette designation data memory area to memorise background image color palette designation data to designate an arbitrary color palette for each character of said background image and object image color palette designation data to designate an arbitrary color palette for each character of said object image,
any one of said first memory medium and said second memory medium including a color compatible data memory area to memorise data representative of color non-compatibility or data representative of color compatability,
and wherein said memory medium determining means determines, based on the data memorised in said color compatible data memory area, which one of said first memory medium and said second memory medium is to be used;
said hand-held color display game machine further comprising:
a background image color palette memory means for memorising background image color palette data corresponding to said background image tone data memorised in said first memory medium;
an object image color palette memory means for memorising object image color palette data corresponding to said object image tone data memorised in said first memory medium; and
a color image signal creating means for creating a color image for said background image and said object image; wherein
said color image signal creating means creates a color image signal for said background image based on a combination of said background image tone data and said background image color palette data and a color image signal for said object image based on a combination of said object tone data and said object image color palette data when said first memory medium is being used as determined by said memory medium determining means, and a color image signal for said background image based on background image color palette data designated by said background image color palette designation data and a color image signal for said object image based on said object image color palette data designated by said object image color palette designation data when said second memory medium is being used as determined by said memory medium determining means.

8. A hand-held color display game machine according to claim 7, wherein said object image color palette memory means memorises first object image color palette data and second object image color palette data,
said first memory medium further comprising color palette designation data to designate color palette data for said object image,
said color image signal creating means creating a color image signal for said object image based on a combination of said object image tone data and said first object image color palette when said first object image color palette is selected based on said color palette designation data, and a color image signal for said object image based on a combination of said object image tone data and said second object image color palette when said second object image color palette is selected based on said color palette designation data.

9. A hand-held color display game machine according to claim 8, wherein said color display game machine further comprises
an operating means to be operated by a user, and
a color palette change means to change said background image color palette data and said image color palette data based on color palette data selected by the operator in response to an instruction to select a color palette by operation of said operating means,
said color image signal creating means creating a color image signal for said background image based on a combination of said background image tone data and background image color palette data changed by said color palette change means, and a color image signal for said object image based on a combination of said object image tone data and object image color data changed by said color palette change means.

## Patentansprüche

1. Tragbares Farbanzeige-Spielgerät, **dadurch gekennzeichnet,**
**dass** das Spielgerät geeignet ist zum selektiven Einsetzen eines ersten Speichermediums, das ein Farbton-Daten-Ausgabemittel zum Ausgeben von Farbton-Daten aufweist, und eines zweiten Speichermediums, das ein Farbdaten-Ausgabemittel zum Ausgeben von Farbdaten aufweist, und
**dass** das Spielgerät aufweist:
ein Speichermedium-Bestimmungsmittel zum Durchführen einer ersten Bestimmung, wann das erste Speichermedium eingesetzt ist, oder einer zweiten Bestimmung, wann das zweite Speichermedium eingesetzt ist,
ein erstes Farbverarbeitungsmittel zum Durchführen einer ersten Farbverarbeitung an Daten, die in Antwort auf die erste Bestimmung aus dem ersten Speichermedium gelesen werden, wobei das erste Farbverarbeitungsmittel eine erste Farbpalette zum Umwandeln der Farbton-Daten in ein erstes Farbanzeigesignal aufweist,
ein zweites Farbverarbeitungsmittel zum Durchführen einer zweiten Farbverarbeitung an Daten, die in Antwort auf die zweite Ermittlung aus dem zweiten Speichermedium gelesen werden, wobei das zweite Farbverarbeitungsmittel eine zweite Farbpalette zum Umwandeln der Farbton-Daten in ein zweites Farbanzeigesignal aufweist, und
ein Farbanzeigemittel zum Anzeigen eines Spiel-Bildes auf der Grundlage von einem von dem ersten Farbanzeigesignal und dem zweiten Farbanzeigesignal.

2. Tragbares Farbanzeige-Spielgerät gemäß Anspruch 1, wobei die erste Farbpalette eine erste Anzahl von Farben aufweist, und wobei die zweite Farbpalette eine zweite Anzahl von Farben aufweist, die größer als die erste Anzahl ist.

3. Tragbares Farbanzeige-Spielgerät gemäß Anspruch 2, wobei die erste Farbpalette aufweist: eine erste Objekt-Hintergrund-Farbpalette, die zum Anzeigen eines Hintergrund-Merkmals in Farbe verwendet wird, und eine erste Objekt-Merkmal-Farbpalette, die zum Anzeigen eines Objekt-Merkmals in Farbe verwendet wird.

4. Tragbares Farbanzeige-Spielgerät gemäß Anspruch 3, wobei die erste Objekt-Merkmal-Farbpalette eine zweite Mehrzahl von Objekt-Farbpaletten aufweist.

5. Tragbares Farbanzeige-Spielgerät gemäß Anspruch 2, wobei die zweite Farbpalette aufweist: eine zweite Hintergrund-Merkmal-Farbpalette, die zum Anzeigen eines Hintergrund-Merkmals in Farbe verwendet wird, und eine zweite Objekt-Merkmal-Palette, die zum Anzeigen eines Objekt-Merkmals in Farbe verwendet wird.

6. Tragbares Farbanzeige-Spielgerät gemäß Anspruch 5, wobei die zweite Hintergrund-Merkmal-Farbpalette eine dritte Mehrzahl von Hintergrund-Farbpaletten aufweist, und wobei die zweite Objekt-Merkmal-Farbpalette eine vierte Mehrzahl von Objekt-Farbpaletten aufweist.

7. Tragbares Farbanzeige-Spielgerät gemäß Anspruch 1, wobei das erste Speichermedium ein Programm für die Schwarz-Weiß-Anzeige speichert und das zweite Speichermedium ein Programm für die Farbanzeige speichert,
wobei das erste Speichermedium einen Hintergrundbild-Farbton-Daten-Speicherbereich zum Speichern von Farbton-Daten für ein Hintergrundbild und einen Objektbild-Farbton-DatenSpeicherbereich zum Speichern von Farbton-Daten für ein Objektbild aufweist,
wobei das zweite Speichermedium aufweist: einen Hintergrundbild-Farbpaletten-Datenspeicherbereich zum Speichern einer Mehrzahl von Arten von Farbpaletten-Daten für das Hintergrundbild, einen Objektbild-Farbpaletten-Datenspeicherbereich zum Speichern einer Mehrzahl von Arten von Farbpaletten-Daten für das Objektbild, und einen Farbpaletten-Bezeichnungs-Datenspeicherbereich zum Speichern von Hintergrundbild-Farbpaletten-Bezeichnungsdaten zum Bezeichnen einer beliebigen Farbpalette für jedes Merkmal des Hintergrundbildes und Objektbild-Farbpaletten-Bezeichnungsdaten zum Bezeichnen einer beliebigen Farbpalette für jedes Merkmal des Objektbildes,
wobei ein beliebiges von dem ersten Speichermedium und dem zweiten Speichermedium einen Farbkompatibilitätsdaten-Speicherbereich zum Speichern von Daten, die eine Farb-Inkompatibilität repräsentieren, oder von Daten, die eine Farb-Kompatibilität repräsentieren, aufweist,
und wobei das Speichermedium-Bestimmungsmittel auf der Grundlage der in dem Farbkompatibilitätsdaten-Speicherbereich gespeicherten Daten bestimmt, welches von dem ersten Speichermedium und dem zweiten Speichermedium verwendet werden soll,
wobei das tragbare Farbanzeige-Spielgerät ferner aufweist:
ein Hintergrundbild-Farbpaletten-Speichermittel zum Speichern von Hintergrundbild-Farbpaletten-Daten, die den Hintergrundbild-Farbton-Daten entsprechen, die in dem ersten Speichermedium gespeichert sind,
ein Objektbild-Farbpaletten-Speichermittel zum Speichern von Objektbild-Farbpaletten-Daten, die den Objektbild-Farbton-Daten entsprechen, die in dem ersten Speichermedium gespeichert sind, und
ein Farbbildsignal-Erzeugungs-Mittel zum Erzeugen eines Farbbildes für das Hintergrundbild und das Objektbild, wobei
das Farbbildsignal-Erzeugungsmittel erzeugt: ein Farbbildsignal für das Hintergrundbild auf der Grundlage einer Kombination der Hintergrundbild-Farbton-Daten und der Hintergrundbild-Farbpaletten-Daten, und ein Farbbildsignal für das Objektbild auf der Grundlage einer Kombination der Objekt-Farbton-Daten und der Objektbild-Farbpaletten-Daten, wenn, wie von dem Speichermittel-Bestimmungsmittel bestimmt, das erste Speichermedium verwendet wird, sowie ein Farbbildsignal für das Hintergrundbild auf der Grundlage von Hintergrundbild-Farbpaletten-Daten, die von den Hintergrundbild-Farbpaletten-Bezeichnungsdaten bezeichnet werden, und ein Farbbildsignal für das Objektbild auf der Grundlage der Objektbild-Farbpaletten-Daten, die von den Objektbild-Farbpaletten-Bezeichnungsdaten bezeichnet werden, wenn, wie von dem Speichermittel-Bestimmungsmittel bestimmt, das zweite Speichermedium verwendet wird.

8. Tragbares Farbanzeige-Spielgerät gemäß Anspruch 7, wobei das Objektbild-Farbpaletten-Speichermittel erste Objektbild-Farbpaletten-Daten und zweite Objektbild-Farbpaletten-Daten speichert,
wobei das erste Speichermedium ferner Farbpaletten-Bezeichnungsdaten zum Bezeichnen von Farbpaletten-Daten für das Objektbild aufweist,
wobei das Farbbildsignal-Erzeugungsmittel erzeugt: ein Farbbildsignal für das Objektbild auf der Grundlage einer Kombination der Objektbild-Farbton-Daten und der ersten Objektbild-Farbpalette, wenn die erste Objektbild-Farbpalette auf der Grundlage der Farbpaletten-Bezeichnungsdaten ausgewählt wird, und ein Farbbildsignal für das Objektbild auf der Grundlage einer Kombination der Objektbild-Farbton-Daten und der zweiten Objektbild-Farbpalette, wenn die zweite Objektbild-Farbpalette auf der Grundlage der Farbpaletten-Bezeichnungsdaten ausgewählt wird.

9. Tragbares Farbanzeige-Spielgerät gemäß Anspruch 8, wobei das Farbanzeige-Spielgerät ferner aufweist:
ein Bedienmittel zum Bedienen durch einen Benutzer, und
ein Farbpaletten-Änderungsmittel zum Ändern der Hintergrundbild-Farbpaletten-Daten und der Bild-Farbpaletten-Daten auf der Grundlage von Farbpaletten-Daten, die von der Bedienperson in Antwort auf eine Anweisung zum Auswählen einer Farbpalette durch Betätigen des Bedienmittels ausgewählt werden,
wobei das Farbbildsignal-Erzeugungsmittel erzeugt: ein Farbbildsignal für das Hintergrundbild auf der Grundlage einer Kombination der Hintergrundbild-Farbton-Daten und der Hintergrundbild-Farbpaletten-Daten, die von dem Farbpaletten-Änderungsmittel geändert werden, und ein Farbbildsignal für das Objektbild auf der Grundlage einer Kombination der Objektbild-Farbton-Daten und der Objektbild-Farbdaten, die von dem Farbpaletten-Änderungsmittel geändert werden.

## Revendications

1. Machine de jeu à affichage couleur portative **caractérisée en ce que**
ladite machine de jeu est capable de monter de manière sélective un premier support de mémoire qui comprend un moyen de sortie de données de ton pour envoyer des données de ton, et un deuxième support de mémoire qui comprend un moyen de sortie de données de couleur pour envoyer des données de couleur, et
ladite machine de jeu comprend :
un moyen de détermination de support de mémoire pour effectuer une première détermination lorsque ledit premier support de mémoire est monté ou une deuxième détermination lorsque ledit deuxième support de mémoire est monté ;
un premier moyen de traitement de couleur pour exécuter un premier traitement de couleur sur les données lues à partir dudit premier support de mémoire en réponse à ladite première détermination, ledit premier moyen de traitement de couleur comprenant une première palette de couleurs pour convertir lesdites données de ton en un premier signal d'affichage couleur ;
un deuxième moyen de traitement de couleur pour exécuter un deuxième traitement de couleur sur les données lues à partir dudit deuxième support de mémoire en réponse à ladite deuxième détermination, ledit deuxième moyen de traitement de couleur comprenant une deuxième palette de couleurs pour convertir lesdites données de couleur en un deuxième signal d'affichage couleur ; et
un moyen d'affichage couleur pour afficher une image de jeu en fonction d'un parmi ledit premier signal d'affichage couleur et ledit deuxième signal d'affichage couleur.

2. Machine de jeu à affichage couleur portative selon la revendication 1, dans laquelle ladite première palette de couleurs comprend un premier nombre de couleurs, et ladite deuxième palette de couleurs comprend un deuxième nombre de couleurs qui est supérieur audit premier nombre.

3. Machine de jeu à affichage couleur portative selon la revendication 2, dans laquelle ladite première palette de couleurs comprend une première palette de couleurs de fond d'objet utilisée pour afficher un personnage de fond en couleur et une première palette de couleurs de personnage d'objet utilisée pour afficher un personnage d'objet en couleur.

4. Machine de jeu à affichage couleur portative selon la revendication 3, dans laquelle ladite première palette de couleurs de personnage d'objet comprend une deuxième pluralité de palettes de couleurs d'objet.

5. Machine de jeu à affichage couleur portative selon la revendication 2, dans laquelle ladite deuxième palette de couleurs comprend une deuxième palette de couleurs de personnage de fond utilisée pour afficher un personnage de fond en couleur et une deuxième palette de personnage d'objet utilisée pour afficher un personnage d'objet en couleur.

6. Machine de jeu à affichage couleur portative selon la revendication 5, dans laquelle ladite deuxième palette de couleurs de personnage de fond comprend une troisième pluralité de palettes de couleurs de fond, et ladite deuxième palette de couleurs de personnage d'objet comprend une quatrième pluralité de palettes de couleurs d'objet.

7. Machine de jeu à affichage couleur portative selon la revendication 1, dans laquelle ledit premier support de mémoire mémorise un programme pour un affichage noir et blanc et ledit deuxième support de mémoire mémorise un programme pour un affichage couleur,
ledit premier support de mémoire comprenant une zone de mémoire de données de ton d'image de fond pour mémoriser des données de ton pour une image de fond et une zone de mémoire de données de ton d'image d'objet pour mémoriser des données de ton pour une image d'objet,
ledit deuxième support de mémoire comprenant une zone de mémoire de données de palette de couleurs d'image de fond pour mémoriser une pluralité de types de données de palette de couleurs pour ladite image de fond, une zone de mémoire de données de palette de couleurs d'image d'objet pour mémoriser une pluralité de types de données de palette de couleurs pour ladite image d'objet, et une zone de mémoire de données de désignation de palette de couleurs pour mémoriser des données de désignation de palette de couleurs d'image de fond pour désigner une palette de couleurs arbitraire pour chaque personnage de ladite image de fond et des données de désignation de palette de couleurs d'image d'objet pour désigner une palette de couleurs arbitraire pour chaque personnage de ladite image d'objet,
l'un quelconque parmi ledit premier support de mémoire et ledit deuxième support de mémoire comprenant une zone de mémoire de données compatibles de couleur pour mémoriser des données représentatives de la non compatibilité de couleur ou des données représentatives de la compatibilité de couleur,
et dans laquelle ledit moyen de détermination de support de mémoire détermine, en fonction des données mémorisées dans ladite zone de mémoire de données compatibles de couleur, lequel parmi ledit premier support de mémoire et ledit deuxième support de mémoire doit être utilisé ;
ladite machine de jeu à affichage couleur portative comprenant en outre :
un moyen de mémoire de palette de couleurs d'image de fond pour mémoriser des données de palette de couleurs d'image de fond correspondant auxdites données de ton d'image de fond mémorisées dans ledit premier support de mémoire ;
un moyen de mémoire de palette de couleurs d'image d'objet pour mémoriser des données de palette de couleurs d'image d'objet correspondant auxdites données de ton d'image d'objet mémorisées dans ledit premier support de mémoire ; et
un moyen de création de signal d'image couleur pour créer une image couleur pour ladite image de fond et ladite image d'objet ; dans laquelle
ledit moyen de création de signal d'image couleur crée un signal d'image couleur pour ladite image de fond en fonction d'une combinaison desdites données de ton d'image de fond et desdites données de palette de couleurs d'image de fond et un signal d'image couleur pour ladite image d'objet en fonction d'une combinaison desdites données de ton d'objet et desdites données de palette de couleurs d'image d'objet lorsque ledit premier support de mémoire est utilisé tel que déterminé par ledit moyen de détermination de support de mémoire, et un signal d'image couleur pour ladite image de fond en fonction des données de palette de couleurs d'image de fond désignées par lesdites données de désignation de palette de couleurs d'image de fond et un signal d'image couleur pour ladite image d'objet en fonction desdites données de palette de couleurs d'image d'objet désignées par lesdites données de désignation de palette de couleurs d'image d'objet lorsque ledit deuxième support de mémoire est utilisé tel que déterminé par ledit moyen de détermination de support de mémoire.

8. Machine de jeu à affichage couleur portative selon la revendication 7, dans laquelle ledit moyen de mémoire de palette de couleurs d'image d'objet mémorise des premières données de palette de couleurs d'image d'objet et des deuxièmes données de palette de couleurs d'image d'objet,
ledit premier support de mémoire comprenant en outre des données de désignation de palette de couleurs pour désigner des données de palette de couleurs pour ladite image d'objet,
ledit moyen de création de signal d'image couleur créant un signal d'image couleur pour ladite image d'objet en fonction d'une combinaison desdites données de ton d'image d'objet et de ladite première palette de couleurs d'image d'objet lorsque ladite première palette de couleurs d'image d'objet est sélectionnée en fonction desdites données de désignation de palette de couleurs, et un signal d'image couleur pour ladite image d'objet en fonction d'une combinaison desdites données de ton d'image d'objet et de ladite deuxième palette de couleurs d'image d'objet lorsque ladite deuxième palette de couleurs d'image d'objet est sélectionnée en fonction desdites données de désignation de palette de couleurs.

9. Machine de jeu à affichage couleur portative selon la revendication 8, dans laquelle ladite machine de jeu à affichage couleur comprend en outre
un moyen d'actionnement destiné à être actionné par un utilisateur, et
un moyen de changement de palette de couleurs pour changer lesdites données de palette de couleurs d'image de fond et lesdites données de palette de couleurs d'image en fonction des données de palette de couleurs sélectionnées par l'opérateur en réponse à une instruction pour sélectionner une palette de couleur par l'actionnement dudit moyen d'actionnement,
ledit moyen de création de signal d'image couleur créant un signal d'image couleur pour ladite image de fond en fonction d'une combinaison desdites données de ton d'image de fond et desdites données de palette de couleurs d'image de fond changées par ledit moyen de changement de palette de couleurs, et un signal d'image couleur pour ladite image d'objet en fonction d'une combinaison desdites données de ton d'image d'objet et desdites données de couleur d'image d'objet changées par ledit moyen de changement de palette de couleurs.
